# EUROPEAN PATENT APPLICATION

(11) **EP 1 903 567 A2**
(43) Date of publication of application: **26.03.2008**
(21) Application number: 07018387.6
(22) Date of filing: 19.09.2007
(51) Int. Cl.: G11B 7/135, G11B 7/09

(54) **Objective lens actuator and optical pickup device**

(30) Priority: 20.09.2006 JP 2006253790
(71) Applicant: Funai Electric Co., Ltd., Daito-shi Osaka 574-0013 (JP)
(72) Inventor: Sasaoka, Hiromasa, Daito-shi Osaka 574-0013 (JP); Takahashi, Kazuhiro, Daito-shi Osaka 574-0013 (JP); Hosoda, Ryozo, Daito-shi Osaka 574-0013 (JP); Hatano, Shinya, Daito-shi Osaka 574-0013 (JP)
(74) Representative: Beetz & Partner

(57) **Abstract**

A first objective lens 38 and a second objective lens 48 which are formed as separate bodies each other are held side by side by a lens holder. The lens holder includes a first lens receiving surface to receive a lower surface of peripheral portion of the first objective lens, and a second lens receiving surface to receive a lower surface of peripheral portion of the second objective lens. The first lens receiving surface and the second lens receiving surface are formed to be coplanar. By this arrangement an optical axis of the first objective lens 38 and an optical axis of the second objective lens 48 become parallel to each other at the same time when the first objective lens 38 is installed on the first lens receiving surface and when the second objective lens 48 is installed on the second lens receiving surface, a relative tilt is automatically solved. By a simple structure of the lens holder the relative tilt between the first objective lens 38 and the second objective lens 48 can be reduced as above described. Further, because of above described structure of the lens holder if one of the objective lenses is a commercial product, a commercial product can be easily utilized.

## Description

### BACKGROUND OF THE INVENTION

### Field of the Invention

The present invention relates to an objective lens actuator on which a plurality of the objective lenses are held side by side, and an optical pickup device which is equipped with the objective lens actuator.

### Description of Related Art

Recently, optical recording media including a compact disc (hereinafter referred to as "a CD") and a digital versatile disc (hereinafter referred to as "a DVD") have become commonplace and widely available. Further, in order to increase a quantity of information recorded on the optical recording medium, researches to realize higher recording density of the optical recording medium have been carried on recently. As a result, a high density optical recording medium (next generation optical disc) such as a High Definition DVD (HD-DVD) which is a high grade DVD or a Blu-ray Disc (hereinafter referred to as "a BD") is about to be available in practical use.

When information is recorded or reproduced (read out) for such an optical recording medium, an optical pickup device is used to condense light beam emitted from a light source on a recording surface of the optical recording medium by an objective lens. Numerical aperture (NA) of the objective lens or a wavelength of the light beam which is emitted from the light source becomes different in this case, depending on kind of the optical recording medium which is used. When the used optical recording medium is a CD, for example, the NA of the objective lens is 0.50 and the wavelength of light beam is 780 nm. Or when the used optical recording medium is a DVD, the NA of the objective lens is 0.65 and the wavelength of light beam is 650 nm. In addition, when the used optical recording medium is a HD-DVD, the NA of the objective lens is 0.65 and the wavelength of light beam is 405 nm. Further, when the used optical recording medium is a BD, the NA of the objective lens is 0.85 and the wavelength of light beam is 405 nm.

Because NA of an objective lens and wavelength of light beam become different in response to kind of a used optical recording medium as described above, recording or reproducing of information for each of the optical recording media can be surely performed if an optical pickup device having the objective lens and the light source corresponding to the used optical recording media is used. However, it is more convenient if one optical pickup device can realize recording or reproducing of information for a plurality of kinds of optical recording media, and many optical pickup devices of the kind are already developed recently. And the optical pickup device which can be compatible with three kinds of the optical recording media, such as a CD, a DVD, and a HD-DVD, or a CD, a DVD, and a BD, for example, by one objective lens, has been appearing recently.

However, when only one objective lens is applied to a plurality of kinds of optical recording media, design of the objective lens in consideration for compensation of aberration generally becomes difficult and it brings high cost. In the optical pickup device which is compatible with four kinds of optical recording media such as a CD, a DVD, a HD-DVD, and a BD, for example, the design of the objective lens becomes very difficult, and the objective lens becomes very expensive even when it can be manufactured. Because of this, it is practical to employ a structure in which two or more objective lens are disposed in an optical system when the optical pickup device which can perform recording of information or the like for three or more kinds of optical recording media is manufactured.

In the meantime in a structure where a plurality of the objective lenses are disposed in the optical system of the optical pickup device, a plurality of the objective lens are held side by side on a lens holder of an objective lens actuator. In this case, distance between the optical recording medium and a tip of each of the objective lenses (vertex of surface) which is called as a working distance (WD), becomes different for each of the objective lenses when information is recorded or reproduced for the optical recording media. By this reason, it was usual that installation positions of each of the objective lenses (lens receiving surface) in the lens holder are made different in a focusing direction (direction of optical axis of each objective lens) in the conventional technology.

However, if the lens receiving surfaces (contacting surfaces with round edge surface of the lens) in the lens holder are different between each of the objective lenses, it becomes difficult to form each of the lens receiving surfaces precisely in parallel, from a view point of accuracy of manufacturing of a metallic mold for the lens holder. As a result, the optical axis of each of the objective lenses tends easily to shift from a parallel direction when each of the objective lenses is disposed in each of the lens receiving surfaces. In other words, "a relative tilt" in which direction of optical axis of each of the objective lenses is different each other, is generated between the respective objective lenses in this case.

As above described, if the relative tilt is generated between the respective objective lenses, the tilt can not be properly adjusted for the optical axes of only one of the objective lenses even when tilting adjustment is performed for the objective lens actuator itself, i.e., the optical axes of only one of the objective lenses can be made to be vertical to the optical recording medium. Therefore large coma aberration is generated and performance of the optical pickup device is degraded when recording or reproducing of information is performed for the optical recording medium by utilizing the other objective lens whose optical axes is not vertical to the optical recording medium.

In this regard, in JP-A-2006-019001, for example, a holding surface of objective lens in at least one of a plurality of holding holes of the objective lenses in the lens holder is formed in curved surface. By this arrangement, the tilting adjustment between the respective objective lenses is made possible, therefore it is possible to make optical axis of the respective objective lenses parallel each other.

Further in JP-A-H11-120602, a similar structure to JP-A-2006-019001 is employed. That is, the objective lens receiving surface in the lens holder is formed in a bottom of cone shape or a tapered shape in JP-A-H11-120602. By this arrangement a plurality of the optical axes of the objective lenses can be adjusted in parallel each other, therefore, it is possible to correct shift of optical axis and to provide optical pickup device with high performance and high reliability.

Further in JP-A-H09-230111, integrally molded lenses in which a plurality of lenses are integrally molded side by side is disclosed. In this structure it is conceivable that optical axes of the respective lenses are in parallel each other in one-body mechanism from the beginning because a plurality of lenses are molded integrally.

In the structure shown in JP-A-2006-019001 or JP-A-H11-120602, an angle of the optical axis of one of the objective lenses for the optical axis of the other objective lens can be precisely adjusted, however, it causes conversely a problem that working property of mounting a plurality of the objective lenses on the lens holder is degraded because such kind of precise adjustment is necessary. Further in the structure shown in JP-A-H09-230111, because a plurality of the objective lenses are integrally molded, even when a commercial product corresponding to one of the objective lenses is available in market as a single product, for example, the commercial product can not be utilized and it causes a problem that total cost of the optical pickup device is increased as a result.

### SUMMARY OF THE INVENTION

The present invention is made to solve the above described problems, it is an object of the present invention to provide an objective lens actuator in which the relative tilt between a plurality of the objective lenses can be reduced with a simple structure, and by this structure the working property of the mounting the respective objective lenses on the lens holder can be improved, as a result, at the same time the objective lens as a commercial product can be easily utilized and a cost rise of the optical pickup device can be suppressed, and an optical pickup device which is equipped with the objective lens actuator.

To attain the above described object, an objective lens actuator according to the present invention includes: a plurality of objective lenses composed as separate bodies each other; a lens holder holding a plurality of the objective lenses side by side; and a driving mechanism moving the lens holder such that a light beam is condensed on a prescribed track on a recording surface of an optical recording medium via the objective lens corresponding to the used optical recording medium, and the objective lens actuator is characterized by that the lens holder has a plurality of lens receiving surfaces receiving each of the objective lenses by contacting with a lower surface of peripheral portion of each of a plurality of the objective lenses, and a plurality of the lens receiving surfaces are formed to be coplanar.

Further, the objective lens actuator according to the present invention may includes: a plurality of objective lenses composed as separate bodies each other; a lens holder holding a plurality of the objective lenses side by side; and a driving mechanism moving the lens holder such that a light beam is condensed on a prescribed track on a recording surface of an optical recording medium via the objective lens corresponding to the used optical recording medium, and the objective lens actuator is characterized by that the lens holder has a lens receiving surface receiving the objective lens by contacting with a lower surface of peripheral portion of any of a plurality of the objective lenses, and a spacer receiving surface receiving a spacer by contacting with the spacer when remaining objective lenses are held via the spacer, and the lens receiving surface and the spacer receiving surface are formed to be coplanar.

Further, the objective lens actuator according to the present invention may includes: a plurality of objective lenses composed as separate bodies each other; a lens holder holding a plurality of the objective lenses side by side; and a driving mechanism moving the lens holder such that a light beam is condensed on a prescribed track on a recording surface of an optical recording medium via the objective lens corresponding to the used optical recording medium, and the objective lens actuator is characterized by that a plurality of the objective lenses are held side by side on the lens holder via a same spacer, the lens holder has a spacer receiving surface receiving the spacer by contacting with the spacer, and the spacer receiving surface is formed as a single continuous plane.

In addition, an optical pickup device according to the present invention includes: a plurality of light sources emitting light beams having wavelength corresponding to a plurality of optical recording media; and an objective lens actuator holding a plurality of objective lenses condensing the light beam emitted from the respective light sources on a recording surface of the used optical recording media, and the optical pickup device is characterized by that the objective lens actuator is structured by the objective lens actuator as above described.

According to the present invention, for example, by a simple structure in which each of the lens receiving surfaces of the lens holder are formed to be coplanar, the relative tilt between the respective objective lenses can be reduced, therefore, working property of the mounting the respective objective lenses on the lens holder can be improved. Further, because a plurality of the objective lenses are formed as separate bodies each other, when a part of a plurality of the objective lenses is available in market as a commercial product, the commercial product can be easily utilized. As a result, increase in cost of the optical pickup device as a whole can be suppressed.

### BRIEF DESCRIPTION OF THE DRAWINGS

Fig. 1 is an explanatory diagram to show a schematic structure of an optical pickup device according to one embodiment of the present invention.
Fig. 2 is a plan view to show a schematic structure of an objective lens actuator utilized in the above described optical pickup device.
Fig. 3 is a front view of the above described objective lens actuator.
Fig. 4 is an enlarged perspective view of a lens holder utilized in the above described objective lens actuator.
Fig. 5 is a plan view of the above described lens holder in a state where a first objective lens and a second objective lens are not held.
Fig. 6 is a cross sectional view of the above described first objective lens and the second objective lens.
Fig. 7 is a cross sectional view of the above described lens holder in a state where the above described first objective lens and the second objective lens are held.
Fig. 8 is a perspective view to show a schematic structure of a spacer utilized when any one of a plurality of the objective lenses is held on the lens holder via the spacer.
Fig. 9 is a plan view to show an example of structure of the above described lens holder.
Fig. 10 is a cross sectional view of the above described lens holder in a state where the first objective lens and the second objective lens are held.
Fig. 11 is a perspective view to show a schematic structure of a spacer utilized when a plurality of objective lenses are held side by side on the lens holder via the same spacer.
Fig. 12 is a plan view to show an example of structure of the above described lens holder.
Fig. 13 is a cross sectional view of the above described lens holder in a state where the first objective lens and the second objective lens are held via the above described spacer.
Fig. 14 is another example of structure of the above described objective lens actuator and a plan view to show a schematic structure of an objective lens actuator of an axial sliding type.
Fig. 15 is a cross sectional view of the above described objective lens actuator.
Fig. 16 is a perspective view of the lens holder of the above described objective lens actuator.

### DETAILED DESCRIPTION OF THE PREFERRED EMBODIMENTS

Above described and other object and feature of the present invention can be more clear by following description of the preferred embodiment with reference to the attached drawings.

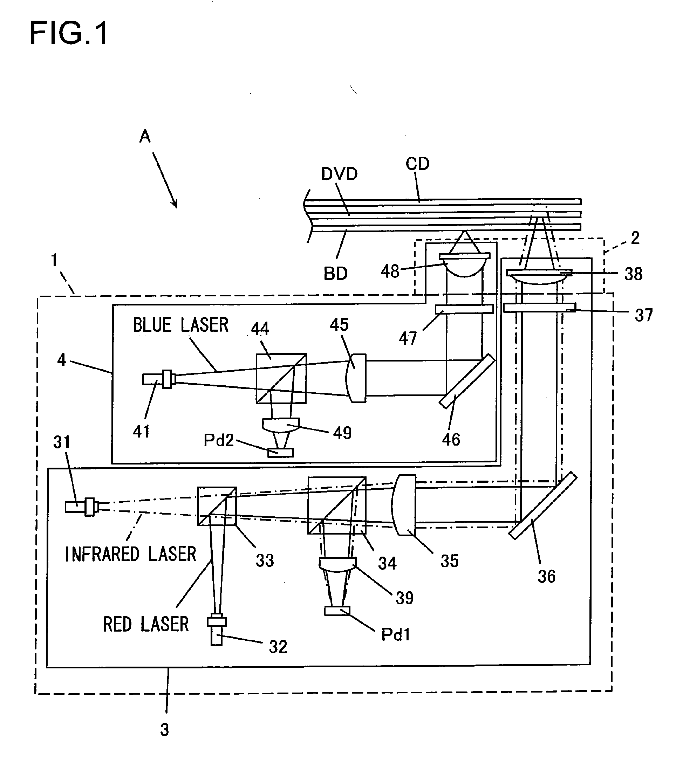

Hereinafter a detailed explanation on one embodiment of the present invention will be described with reference to the drawings. Fig. 1 is an explanatory diagram to show a schematic structure of an optical pickup device A according to the present invention. The optical pickup device A includes main body 1 and an objective lens actuator 2. Further, the optical pickup device A is provided with a first optical system 3 to perform recording/reproducing of a CD medium as a first recording medium or a DVD medium as a second recording medium, and a second optical system 4 to perform recording/reproducing of a BD medium (hereinafter referred also to as simply "BD") as a third recording medium.

At this point, in Fig. 1, a light path of an infrared laser is shown in dot and dash line, and a light path of a red laser is shown in solid line, for the sake of convenience. In addition, a light path of a blue laser is shown also in solid line. Here, the above described CD medium includes CD-ROM, CD-R, CD-RW or the like, and the above described DVD medium includes DVD-ROM, DVD-R, DVD+R, DVD-RW, DVD+RW, DVD-RAM or the like.

The main body 1 means a part other than the objective lens actuator 2 in the optical pickup device A, and the main body 1 includes major part of the first optical system 3 and the second optical system 4. The objective lens actuator 2 holds a plurality of the objective lenses which condense laser beams emitted from a plurality of light sources on a recording surface of an optical recording medium which is used in the present embodiment, and detailed explanation on it will be described later. Hereinafter, explanation will be given about the first optical system 3 and the second optical system 4, firstly.

The first optical system 3 is equipped with an infrared laser light source 31 and a red laser light source 32, a dichroic prism 33, a polarization beam splitter 34, a collimator lens 35, an upstand mirror 36, a quarter-wave plate 37, a first objective lens 38, a sensor lens 39, and a light receiving element Pd1.

The infrared laser light source 31 emits an infrared laser light beam having a wavelength of about 780 nm which is used for recording/reproducing of a CD medium. The red laser light source 32 emits a red laser light beam having a wavelength of about 650 nm which is used for recording/reproducing of a DVD medium.

The dichroic prism 33 is a prism which transmits the light beam having a wavelength of the infrared region and reflects the light beam having a wavelength of the red region. In other words, the laser beam emitted from the infrared laser light source 31 passes through the dichroic prism 33 and the laser beam emitted from the red laser light source 32 is reflected by a reflecting surface of the dichroic prism 33, then it is output from the dichroic prism 33. Here, in the present embodiment the dichroic prism 33 is utilized to transmit the infrared laser beam and reflect the red laser beam, however, the present invention is not limited to this embodiment.

The polarization beam splitter 34 is an optical element which transmits or reflects incoming laser beam in response to polarization direction of the incoming laser beam. In the present embodiment, the laser beam emitted from the infrared laser light source 31 or the red laser light source 32 (for example, P polarization) passes through the polarization beam splitter 34. On the other hand, the laser beam reflected by a recording surface of a CD medium or a DVD medium and entering the polarization beam splitter 34 (for example, S polarization) is reflected by the polarization beam splitter 34.

The collimator lens 35 converts the laser beam of diffusion light emitted from the infrared laser light source 31 or the red laser light source 32 both of which are point light sources, into parallel light. The laser beam output from the collimator lens 35 is reflected by the upstand mirror 36 in a direction which is perpendicular to an incoming direction. By this arrangement the light path of the laser beam is changed to a direction which is perpendicular to the recording surface of a CD medium or a DVD medium. The quarter-wave plate 37 converts an incoming light beam with linear polarization into a light beam with circular polarization, and converts an incoming light beam with circular polarization into a light beam with linear polarization.

The first objective lens 38 is composed of an aspheric lens, for example, to condense the infrared laser beam on the recording surface of a CD medium and to condense the red laser beam on the recording surface of a DVD medium as well. In other words, the first objective lens 38 makes the infrared laser beam converge to irradiate on the recording surface of a CD medium as a laser spot, and makes the red laser beam converge to irradiate on the recording surface of a DVD medium as a laser spot as well.

The laser beam reflected by the recording surface of a CD medium or a DVD medium (infrared laser beam or red laser beam) enters the quarter-wave plate 37 again. At this time the reflected laser beam is converted from the circular polarization into the linear polarization. The polarization direction of the reflected laser beam is perpendicular to the polarization direction of the laser beam (for example, P polarization) emitted from the infrared laser light source 31 or the red laser light source 32. That is, the light beam from the quarter-wave plate 37 to the upstand mirror 36 is S polarization, for example. By this arrangement the laser beam entering the polarization beam splitter 34 from the quarter-wave plate 37 via the upstand mirror 36, does not pass through the polarization beam splitter 34 but is reflected by the polarization beam splitter 34 and enters the light receiving element Pd1 via the sensor lens 39. In the light receiving element Pd1, the incoming laser beam is converted into electric signal and output signal from the light receiving element Pd1 is utilized in recording/reproducing of a CD medium or a DVD medium.

On the other hand, the second optical system 4 is equipped with a blue laser light source 41, a polarization beam splitter 44, a collimator lens 45, an upstand mirror 46, a quarter-wave plate 47, a second objective lens 48, a sensor lens 49, and a light receiving element Pd2.

The blue laser light source 41 emits a blue laser light beam having a wavelength of about 405 nm which is used for recording/reproducing of a BD. The second objective lens 48 condenses the blue laser beam on the recording surface of a BD. In other words, the second objective lens 48 makes the blue laser beam converge to irradiate on the recording surface of a BD medium as a laser spot. In the present embodiment the second objective lens 48 and the first objective lens 38 are separately formed, that is, the second objective lens 48 is not integrated with the first objective lens 38. Therefore, when a lens which corresponds to at least one of the first objective lens 38 and the second objective lens 48 is available as a commercial product, it is possible to easily utilize the commercial product.

The polarization beam splitter 44, the collimator lens 45, the upstand mirror 46, the quarter-wave plate 47, the sensor lens 49, and the light receiving element Pd2 in the second optical system 4 correspond respectively to the polarization beam splitter 34, the collimator lens 35, the upstand mirror 36, the quarter-wave plate 37, the sensor lens 39, and the light receiving element Pd1 in the first optical system 3. They are structured by substantially the same members and have the same functions. As a result, the detailed explanation about each of the above described component elements of the second optical system 4 is omitted.

Among the above described optical members, the first objective lens 38 in the first optical system 3 and the second objective lens 48 in the second optical system 4 are held by the objective lens actuator 2. The objective lens actuator 2 is mounted on the main body 1.

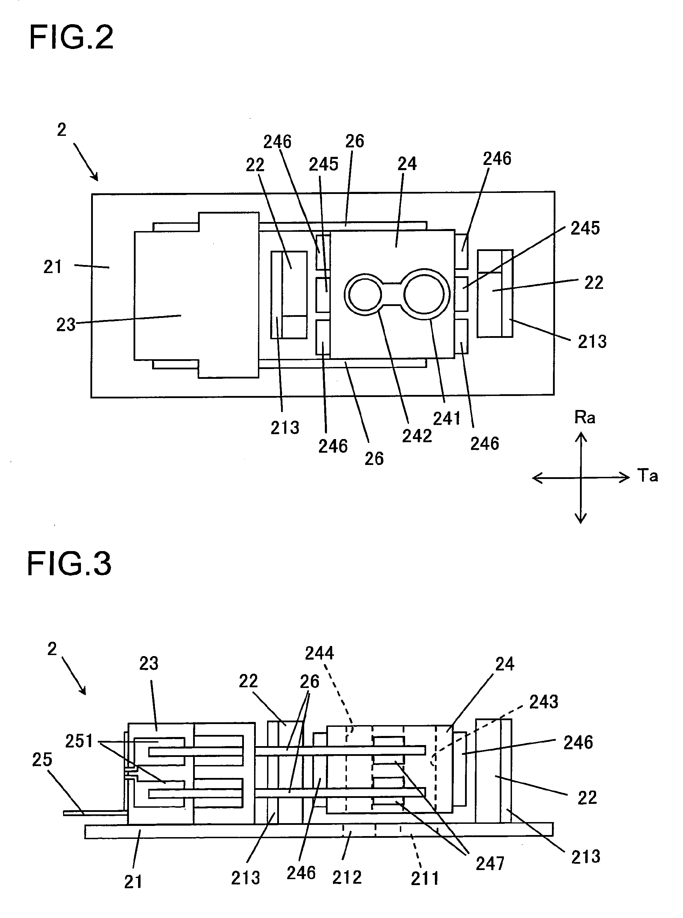

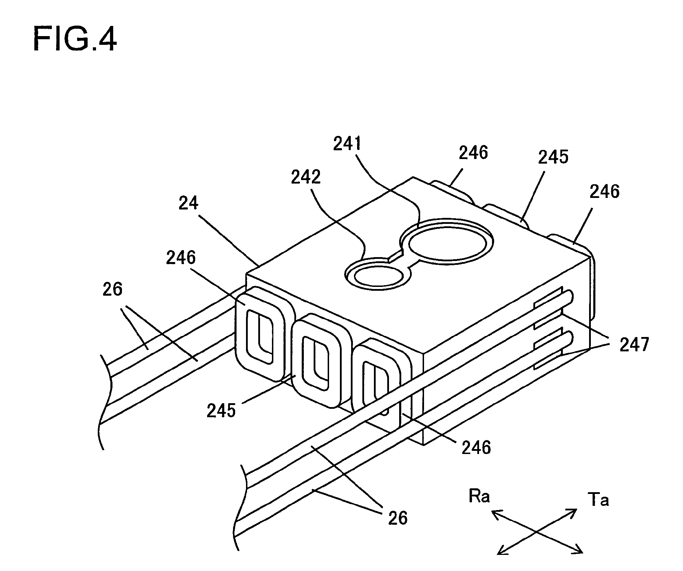

Next, an explanation about the objective lens actuator 2 in the present invention will be described. Fig. 2 is a plan view to show a schematic structure of an objective lens actuator 2 utilized in the optical pickup device A in the present embodiment, Fig. 3 is a front view of the objective lens actuator 2 shown in Fig. 2, and Fig. 4 is an enlarged perspective view of a lens holder 24 utilized in the objective lens actuator 2 shown in Fig. 2. At this point, in Fig. 2 and Fig. 4 "Ra" designates a radial direction of the optical disc medium (a CD medium, a DVD medium, or a BD) and "Ta" designates a tangential direction (circumferential direction) which is perpendicular to the radial direction. Further the first objective lens 38 and the second objective lens 48 are not shown in these drawings for the sake of convenience.

The objective lens actuator 2 is equipped with an actuator base 21, permanent magnets 22, a support member 23, a lens holder 24, an electric power base plate 25, and wire springs 26, and these elements are structured as so called wire type objective lens actuator.

The actuator base 21 is a base plate which is formed by punching or bending of metal plate. In the actuator base 21, a first through hole 211 in which the infrared laser beam or the red laser beam passes and a second through hole 212 in which the blue laser beam passes are made. Further, in the actuator base 21, the permanent magnets 22 are held and magnet holders 213 are formed which act as back yokes.

The permanent magnets 22 applies a magnetic field on the lens holder 24, and they are made of neodymium magnet, for example. Magnetic poles (N pole, S pole) of the permanent magnet 22 are formed in shapes to generate a magnetic field respectively traverses currents that pass through a focusing coil 245 and tracking coils 246. Details of the focusing coil and the tracking coil will be described later.

The supporting member 23 is made of resin and it is disposed to stand on the actuator base 21. The supporting member 23 is firmly fixed on the actuator base 21 by bolts, for example, however, it may be fixed by other manners such as insertion, welding, adhesion, or the like so as not to drop off from the actuator base 21.

The lens holder 24 is formed by resin molding, for example, and it has a hole 241 for insertion of the first objective lens 38 and a hole 242 for insertion of the second objective lens 48 on its upper surface side. The holes 241, 242 are formed in alignment with the Ta direction. Therefore, when the first objective lens 38 is inserted in the hole 241 and the second, objective lens 48 is inserted in the hole 242, the first objective lens 38 and the second objective lens 48 are held in alignment with the Ta direction on the lens holder 24.

In addition, a first through hole 243 in which the infrared laser beam or the red laser beam passes and a second through hole 244 in which the blue laser beam passes, the focusing coil 245, the tracking coil 246, and connection terminals 247 are formed on the lens holder 24.

The first through hole 243 is made to pass through the lens holder 24 from a lower surface to an upper surface and it is formed in a position which corresponds to the hole 241 and the first through hole 211 in the actuator base 21. Further, a diameter of the first through hole 243 is made smaller than a diameter of the hole 241, and when the first objective lens 38 is inserted in the hole 241, the first objective lens 38 is held by the lens holder 24 in a manner that a lens surface (a surface into which the light beam from the light source enters) of the first objective lens 38 is fallen in the first through hole 243.

The second through hole 244 is also made to pass through the lens holder 24 from the lower surface to the upper surface and it is formed in a position which corresponds to the hole 242 and the second through hole 212 in the actuator base 21. Further, a diameter of the second through hole 244 is made smaller than a diameter of the hole 242, and when the second objective lens 48 is inserted in the hole 242, the second objective lens 48 is held by the lens holder 24 in a manner that a lens surface (a surface into which the light beam from the light source enters) of the second objective lens 48 is fallen in the second through hole 244.

The focusing coil 245 is a coil to move the lens holder 24 in an optical axis direction, and the tracking coil 246 is a coil to move the lens holder 24 in a radial direction of the optical recording medium. The connection terminals 247 are terminals with which the wire springs 26 is electrically connected. Details of the wire springs 26 will be described later.

The electric power base plate 25 is formed by, for example, a flexible print circuit (FPC) which has flexibility and it is adhered so as to cover about one half of the supporting member 23. Here, a material of the electric power base plate 25 is not limited to the FPC, and any material may be employed as far as it can be attached stably to the supporting member 23. The electric power base plate 25 is equipped with terminal portions 251 with which the wire springs 26 are electrically connected.

The wire spring 26 is made of material which has conductivity and elasticity (metal wire), one end of it is supported by the supporting member 23 via the terminal portions 251 in the electric power base plate 25. On the other hand, the other end of the wire spring 26 is connected with the focusing coil 245 and the tracking coil 246 via the connection terminal 247 to support the lens holder 24 in shakable manner with respect to the actuator base 21. In the present embodiment, the lens holder 24 is supported by the supporting member 23 via two wire springs 26 so as not to contact with the actuator base 21 at its bottom portion. At this point, a plurality of the wire springs 26 more than three may be utilized.

Because the terminal portion 251 and the connection terminal 247 are electrically connected via the wire spring 26, it becomes possible to supply electric power from the electric power base plate 25 to the focusing coil 245 and the tracking coil 246 via the wire spring 26. By this arrangement it becomes possible to move the lens holder 24 in a focusing direction (optical axis direction) and a tracking direction (radial direction) by interaction between electric current passing through the focusing coil 245 and the tracking coil 246 and magnetic field generated by the permanent magnets 22, therefore the focusing control and the tracking control can be performed.

It can be said that at least the permanent magnets 22, the supporting member 23, the focusing coil 245, the tracking coil 246, the electric power base plate 25, and the wire springs 26 compose a driving means (driving mechanism) to drive the lens holder 24 such that the laser beam is condensed on a prescribed track on the recording surface of the optical recording medium via the objective lens which corresponds to the used optical recording medium because they perform action as above described.

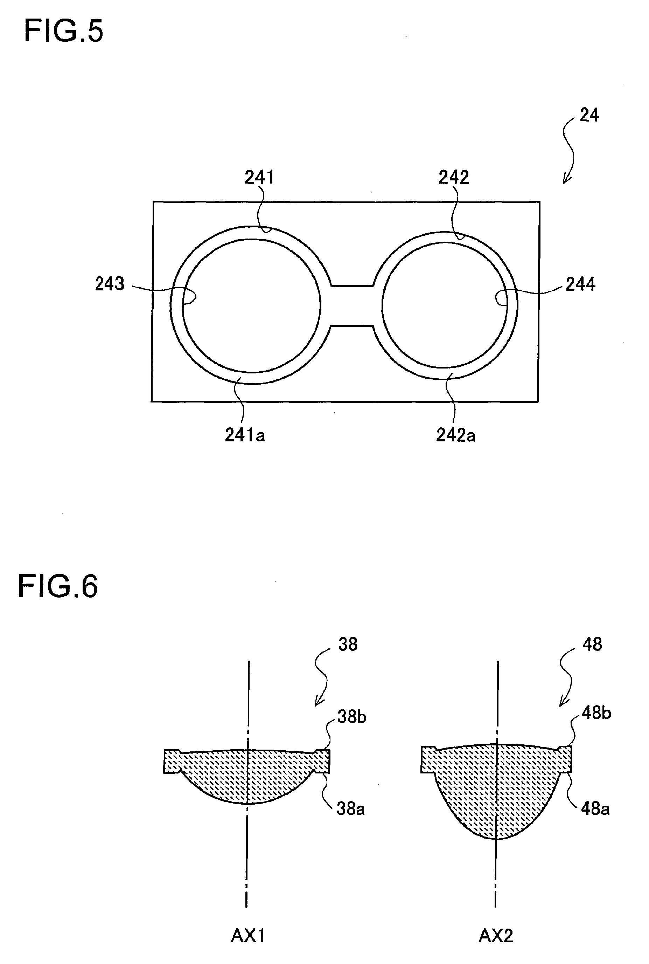

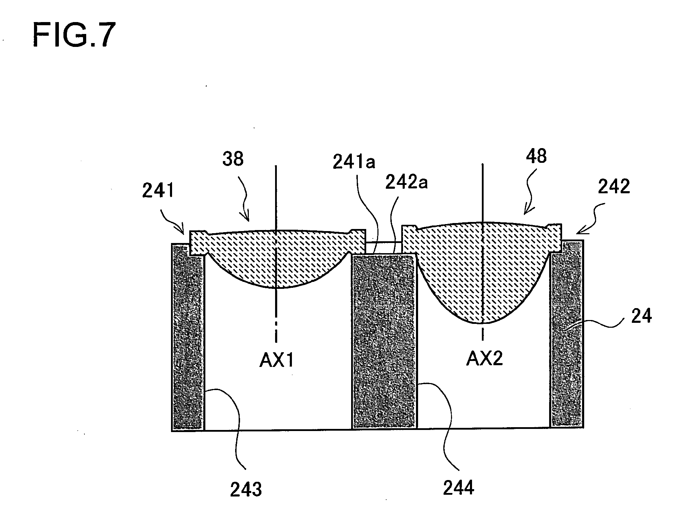

Next, details of the objective lens actuator 2 according to the present invention will be described. Fig. 5 is a plan view of the lens holder 24 in a state where a first objective lens 38 and a second objective lens 48 are not held, Fig. 6 is a cross sectional view of the first objective lens 38 and the second objective lens 48, and Fig. 7 is a cross sectional view of the lens holder 24 in a state where the first objective lens 38 and the second objective lens 48 are held.

The lens holder 24 is equipped with a plurality of lens receiving surfaces which receive each of the objective lenses by contacting with each of round edge surfaces of a plurality of the objective lens. To be more precise, the lens holder 24 has the first lens receiving surface 241a and the second lens receiving surface 242a. The first lens receiving surface 241a receives the first objective lens 38 by contacting with the round edge surface 38a of the first objective lens 38. The second lens receiving surface 242a receives the second objective lens 48 by contacting with the round edge surface 48a of the second objective lens 48.

Here, the round edge surface 38a of the first objective lens 38 means a lower surface of a flange like peripheral portion of the first objective lens 38. Incidentally, the round edge surface 38b of the first objective lens 38 means an upper surface of a flange like peripheral portion of the first objective lens 38. The round edge surfaces 38a, 38b are opposed and parallel surfaces each other, and they are formed in perpendicular to the optical axis of the first objective lens 38.

Similarly, the round edge surface 48a of the second objective lens 48 means a lower surface of a flange like peripheral portion of the second objective lens 48. Incidentally, the round edge surface 48b of the second objective lens 48 means an upper surface of a flange like peripheral portion of the second objective lens 48. The round edge surfaces 48a, 48b are opposed and parallel surfaces each other, and they are formed in perpendicular to the optical axis of the second objective lens 48.

In the present embodiment, the first lens receiving surface 241a and the second lens receiving surface 242a are formed to be coplanar. That is, the first lens receiving surface 241a and the second lens receiving surface 242a form a single continuous plane. At this point, to obtain the first lens receiving surface 241a and the second lens receiving surface 242a which are made to be coplanar, it is enough to process surfaces corresponding to the first lens receiving surface 241a and the second lens receiving surface 242a in a metal mold which is utilized for forming the lens holder 24, to be coplanar, so the process is very easy.

As above described, when the first objective lens 38 is installed on the lens holder 24, i.e., when the round edge surface 38a of the first objective lens 38 contacts with the first lens receiving surface 241a, the optical axis AX1 of the first objective lens 38 becomes perpendicular to the first lens receiving surface 241a, and when the second objective lens 48 is installed on the lens holder 24, i.e., when the round edge surface 48a of the second objective lens 48 contacts with the second lens receiving surface 242a, the optical axis AX2 of the second objective lens 48 becomes perpendicular to the second lens receiving surface 242a, because the first lens receiving surface 241a and the second lens receiving surface 242a are structured to be coplanar in the lens holder 24.

That is, the optical axis AX1 of the first objective lens 38 and the optical axis AX2 of the second objective lens 48 become automatically parallel to each other at the same time when the first objective lens 38 is installed on the first lens receiving surface 241a and when the second objective lens 48 is installed on the second lens receiving surface 242a. As a result, the relative tilt between the first objective lens 38 and the second objective lens 48 is automatically solved.

Here, even if the first lens receiving surface 241a and the second lens receiving surface 242a are not in a horizontal state, i. e., they are formed in a state a little bit apart from the horizontal state, the optical axis AX1 of the first objective lens 38 and the optical axis AX2 of the second objective lens 48 become parallel when the first objective lens 38 and the second objective lens 48 are installed on the lens holder 24 as far as they are planes and especially to be coplanar. Therefore, the optical axis AX1 of the first objective lens 38 and the optical axis AX2 of the second objective lens 48 can be made perpendicular to the optical recording medium by performing the tilting adjustment of the objective lens actuator 2 as a whole in a state where the first objective lens 38 and the second objective lens 48 are held by the objective lens actuator 2.

As above described, if a plurality of lens receiving surfaces i.e., the first lens receiving surface 241a and the second lens receiving surface 242a are formed to be coplanar, the relative tilt between the first objective lens 38 and the second objective lens 48 can be easily reduced with such a simple structure . As a result, working property of the mounting the first objective lens 38 and the second objective lens 48 on the lens holder 24 can be improved without performing additional adjustment of the conventional technology, i.e., tilting adjustment for one objective lens.

At this point, accuracy of the first objective lens 38 and the second objective lens 48 (for example, accuracy of perpendicular between the round edge surface 38a and the optical axis AX1**,** accuracy of perpendicular between the round edge surface 48a and the optical axis AX2, and the like) is guaranteed so as to be good to some extent by manufacturer. Therefore, if only accuracy of the metal mold which is utilized for forming the lens holder 24 is managed, the relative tilt between the first objective lens 38 and the second objective lens 48 can be easily solved as above described, and to reduce the relative tilt can be easily attained.

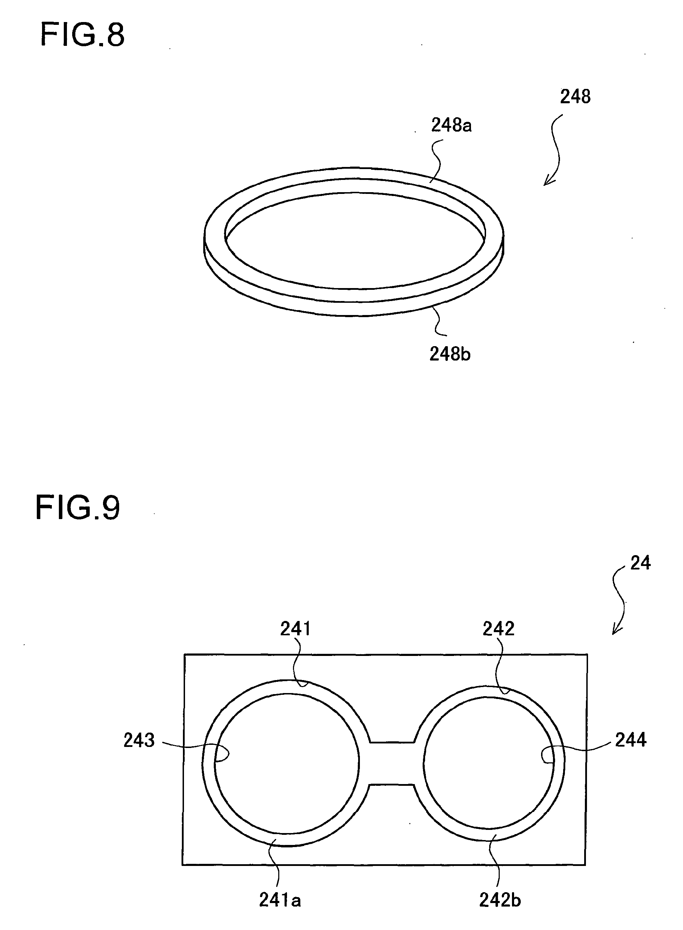

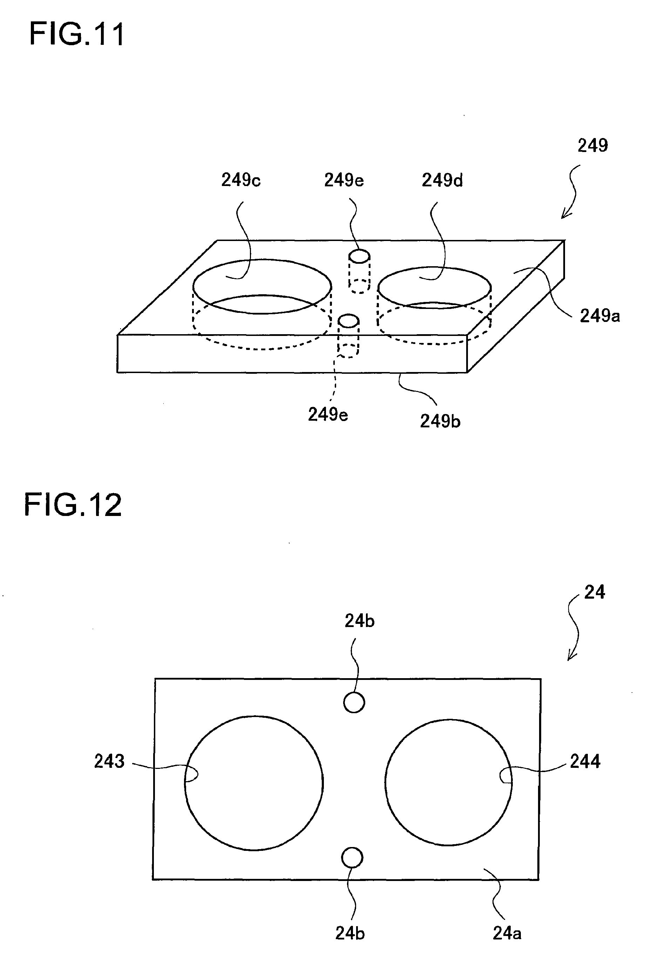

According to the structure of the objective lens actuator 2 as above described, in comparison with a structure in that the first objective lens 38 and/or the second objective lens 48 are held by utilizing a spacer 248 (See, Fig. 8) or a spacer 249 (See, Fig. 11) which will be described later, number of parts can be reduced because such spacers 248, 249 are not utilized. As a result, structure of the objective lens actuator 2 as above described is preferable if reduction of cost is given a first priority.

In the mean time, some of a plurality of the objective lenses may be held by the lens holder 24 through an individual spacer. Fig. 8 is a perspective view to show a schematic structure of a spacer 248 as the individual spacer as above described. The spacer 248 is formed in a flat cylindrical shape. An upper surface of it is a lens side contacting surface 248a and the lower surface of it is a holder side contacting surface 248b.

The lens side contacting surface 248a is a surface which contacts with the round edge surface (for example, round edge surface 48a) of the objective lens (for example, second objective lens 48) to be held and the holder side contacting surface 248b is a surface which contacts with the spacer receiving surface 242b (See, Fig. 9) of the lens holder 24 whose details will be described later. The lens side contacting surface 248a and the holder side contacting surface 248b are made parallel.

When any one of a plurality of the objective lenses is held by utilizing such a spacer 248 on the lens holder 24, a structure shown in Fig. 9 can be utilized as for the lens holder 24. Fig. 9 is a plan view to show another example of a structure of the lens holder 24. In this lens holder 24, the second lens receiving surface 242a as above described functions as the spacer receiving surface 242b. The spacer receiving surface 242b is a surface to receive the spacer 248 by contacting with the holder side contacting surface 248b of the spacer 248 when the objective lens (for example, second objective lens 48) to be held is held through the spacer 248.

At this moment because the first lens receiving surface 241a and the second lens receiving surface 242a are made to be coplanar as above described, even when the second lens receiving surface 242a functions as the spacer receiving surface 242b, it can be said that the first lens receiving surface 241a and the spacer receiving surface 242b are formed to be coplanar.

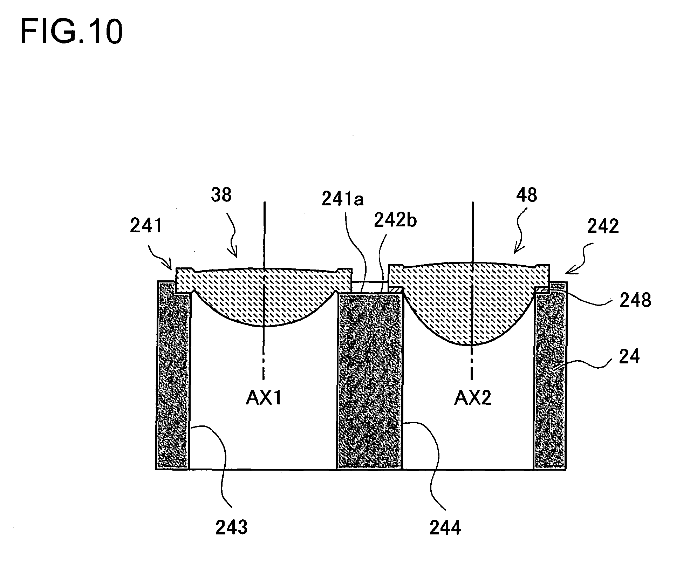

Fig. 10 is a cross sectional view of the lens holder 24 with a structure as above described in a state where the first objective lens 38 and the second objective lens 48 are held. As shown in Fig. 10, the first objective lens 38 and the second objective lens 48 can be held by the lens holder 24 by means that the first objective lens 38 is directly inserted in the hole 241 and the second objective lens 48 is inserted in the hole 242 through the spacer 248.

Even in this kind of lens holder 24, because the first lens receiving surface 241a and the spacer receiving surface 242b are formed to be coplanar, the optical axis AX1 of the first objective lens 38 and the optical axis AX2 of the second objective lens 48 become parallel to each other at the same time when the first objective lens 38 is installed on the first lens receiving surface 241a and when the second objective lens 48 is installed on the spacer receiving surface 242b through the spacer 248 as far as the first objective lens 38, the second objective lens 48, and the spacer 248 are designed precisely. Therefore, the relative tilt between the first objective lens 38 and the second objective lens 48 is automatically solved. As a result, even in a structure in which a plurality of the objective lenses are held and any one of the objective lenses is held by utilizing the spacer 248, the working property of the mounting each of the objective lenses on the lens holder 24 can be improved.

Especially, the optical axis AX1 of the first objective lens 38 which is held by the first lens receiving surface 241a and the optical axis AX2 of the second objective lens 48 which is held through the spacer 248 can be surely made to be parallel on the lens holder 24 because the lens side contacting surface 248a of the spacer 248 and the holder side contacting surface 248b are parallel. As a result even in a structure the spacer 248 is utilized, the relative tilt between the first objective lens 38 and the second objective lens 48 can be surely reduced.

Here, in the above described explanation, the second objective lens 48 is held by the lens holder 24 through the spacer 248, however, a structure may be employable in which the first objective lens 38 is held by the lens holder 24 through a different individual spacer. In this case the first lens receiving surface 241a functions as the spacer receiving surface among the first lens receiving surface 241a and the second lens receiving surface 242a shown in Fig. 5, however, the spacer receiving surface as above described and the second lens receiving surface 242a are formed to be coplanar because the first lens receiving surface 241a and the second lens receiving surface 242a are formed to be coplanar. As a result, in this case too, the above described effect of the present invention can be obtained as well.

Further, by a structure in which any one of the objective lenses is held by utilizing the spacer 248 on the lens holder 24, when the objective lens held through the spacer 248 is available in a market as a commercial product, it becomes possible to utilize a spacer 248 with high accuracy which corresponds to the commercial product. As a result, the present invention has a merit that it can select the spacer 248 in response to the commercial product.

By the way a structure may be possible in which a plurality of the objective lenses are held side by side by the lens holder 24 through the same spacer (common spacer). Fig. 11 is a perspective view to show a schematic structure of the spacer 249 as the common spacer. This spacer 249 is made of resin or by metal, for example, and formed in a flat plate shape. An upper surface of the spacer 249 is made as the lens side contacting surface 249a, and a lower surface is made as the holder side contacting surface 249b.

The lens side contacting surface 249a is a surface which contacts with the round edge surface (round edge surface 38a, 48a) of a plurality of the objective lenses (the first objective lens 38, the second objective lens 48) to be held. The holder side contacting surface 249b is a surface which contacts with the spacer receiving surface 24a (See, Fig. 12) of the lens holder 24, which will be described later. In addition, the lens side contacting surface 249a and the holder side contacting surface 249b are parallel.

Fig. 12 is a plan view to show other example of structure of the lens holder 24 in a state where the first objective lens 38 and the second objective lens 48 are not held. This lens holder 24 is equipped with the spacer receiving surface 24a and two bosses 24b. The spacer receiving surface 24a is a surface to receive the spacer 249 by contacting with the holder side contacting surface 249b of the spacer 249, and it is formed in a single continuous plane. At this point, the spacer receiving surface 24a may be a flat plane or may be a slightly flectional plane as far as it is a single continuous plane. The bosses 24b, 24b are arranged to protrude from the spacer receiving surface 24a, and the spacer 249 is positioned with regard to the lens holder 24 by inserting the bosses 24b, 24b into third through hole 249e, 249e of the spacer 249, which will be described later.

The spacer 249 shown in Fig. 11 is equipped with a first through hole 249c, a second through hole 249d, and two of third through holes 249e, 249e. The first through hole 249c is a through hole which penetrates from the lower surface to the upper surface and has a diameter equivalent to the first through hole 243 (See, Fig. 12) of the lens holder 24. When the round edge surface 38a of the first objective lens 38 contacts with the lens side contacting surface 249a of the spacer 249, the lens surface of the first objective lens 38 (a surface into which the light beam enters from the light source) is fallen into the first through hole 249c.

The second through hole 249d is a through hole which penetrates from the lower surface to the upper surface and has a diameter equivalent to the second through hole 244 (See, Fig. 12) of the lens holder 24. The second through hole 249d is formed in alignment with the first through hole 249c. When the round edge surface 48a of the second objective lens 48 contacts with the lens side contacting surface 249a of the spacer 249, the lens surface of the second objective lens 48 (a surface into which the light beam enters from the light source) is fallen into the second through hole 249d.

The third through holes 249e, 249e are holes into which the bosses 24b, 24b (See, Fig. 12) of the lens holder 24 are inserted respectively. When the bosses 24b, 24b are inserted into the third through holes 249e, 249e, a position of the first through hole 243 of the lens holder 24 and a position of the first through hole 249c of the spacer 249 conform each other in a contacting surface between the lens holder 24 and the spacer 249 then they becomes a state where they are straightly joined. Similarly, when the bosses 24b, 24b are inserted into the third through holes 249e, 249e, a position of the second through hole 244 of the lens holder 24 and a position of the second through hole 249d of the spacer 249 conform each other in a contacting surface between the lens holder 24 and the spacer 249 then they becomes a state where they are straightly joined.

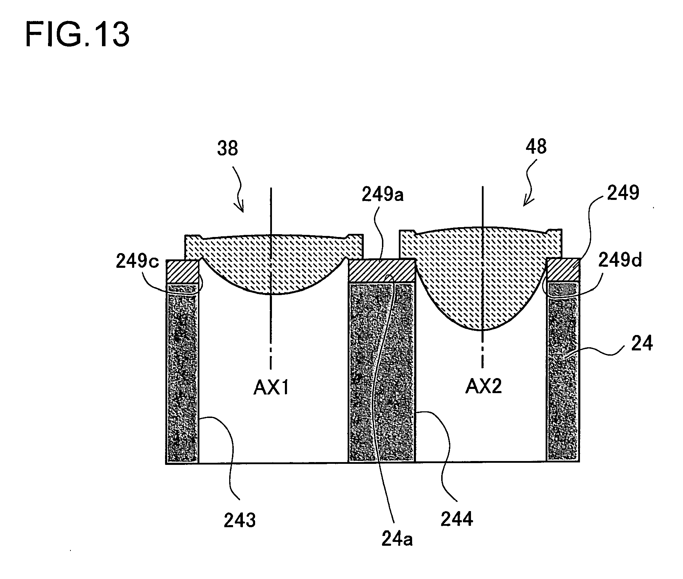

Fig. 13 is a cross sectional view of the lens holder 24 having the above described structure in a state where the first objective lens 38 and the second objective lens 48 are held through the spacer 249. The first objective lens 38 and the second objective lens 48 can be held side by side on the lens holder 24 through the spacer 249 by that the round edge surface 38a of the first objective lens 38 contacts with the lens side contacting surface 249a of the spacer 249, the lens surface of it is fallen into the first through hole 249c, the round edge surface 48a of the second objective lens 48 contacts with the lens side contacting surface 249a of the spacer 249, the lens surface of it is fallen into the second through hole 249d, and the holder side contacting surface 249b of the spacer 249 contacts with the spacer receiving surface 24a of the lens holder 24 in a state where the first objective lens 38 and the second objective lens 48 are held side by side by the spacer 249.

At this time, because the spacer receiving surface 24a in the lens holder 24 is formed as the single continuous plane as above described, the optical axis AX1 of the first objective lens 38 and the optical axis AX2 of the second objective lens 48 become parallel to each other at the same time when the first objective lens 38 and the second objective lens 48 are installed on the spacer receiving surface 24a through the spacer 249 as far as the first objective lens 38, the second objective lens 48, and the spacer 249 are designed precisely. Therefore, the relative tilt between the first objective lens 38 and the second objective lens 48 is automatically solved. As a result, even in a structure in which all of a plurality of the objective lenses are held by utilizing the spacer 249, the working property of the mounting each of the objective lenses on the lens holder 24 can be improved.

Especially, in the present embodiment because the lens side contacting surface 249a of the spacer 249 and the holder side contacting surface 249b are parallel, the optical axis AX1 of the first objective lens 38 and the optical axis AX2 of the second objective lens 48 can be made parallel by holding at the spacer 249, when the holder side contacting surface 249b of the spacer 249 contacts with the spacer receiving surface 24a if the spacer receiving surface 24a of the lens holder 24 is a flat surface or not. As a result, the relative tilt between the first objective lens 38 and the second objective lens 48 can be surely reduced. As a result, in the structure in which the spacer 249 is utilized, it is not necessary to require high accuracy for the lens holder 24, especially in degree of flatness of the spacer receiving surface 24a, manufacturing cost of the lens holder 24 can be reduced.

In addition, because a flat plate parts (spacer 249) becomes pretty large by utilizing the common spacer 249 for the first objective lens 38 and the second objective lens 48, the present invention also has a merit that a degree of flatness of the spacer 249 (degree of flatness and degree of parallel for the lens side contacting surface 249a and the holder side contacting surface 249b) can be easily obtained.

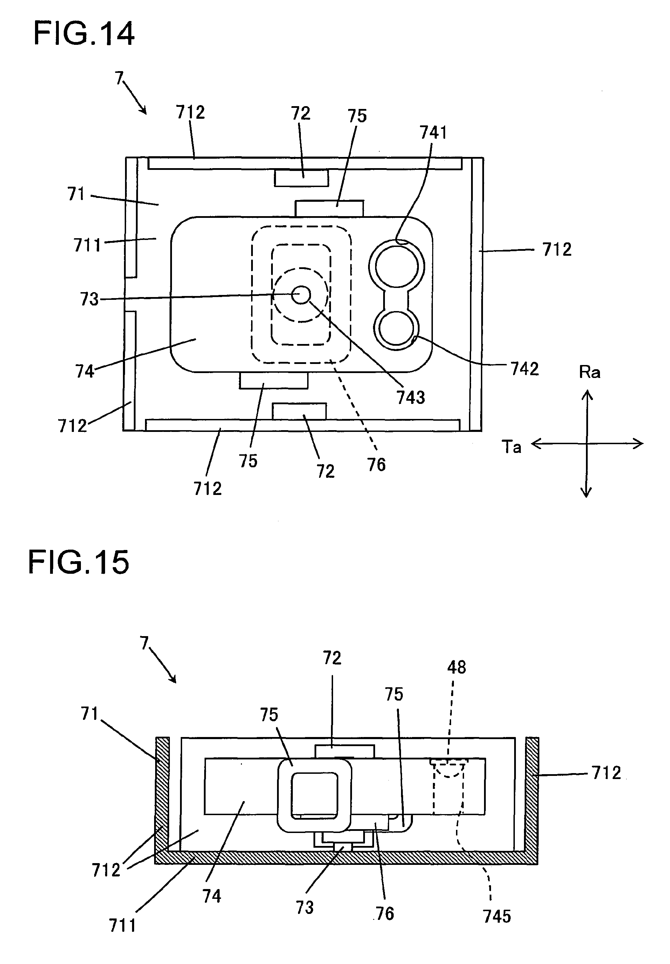

It is possible that the spacer 249 is formed of resin or metal as above described. But it is preferable for the spacer 249 to be formed by metal rather than formed of resin from the view point of securing the degree of flatness of the spacer 249. However, because metal spacer 249 becomes heavy at its weight, it is preferable to apply the metal spacer to the objective lens actuator 7 not of the wire type but of an axial sliding type (See, Fig. 14) described in the following.

In the above described explanation an example of the objective lens actuator 2 which is structured as the wire type is given, however, the objective lens actuator may be structured as the axial sliding type. Hereinafter, the axial sliding type objective lens actuator will be described.

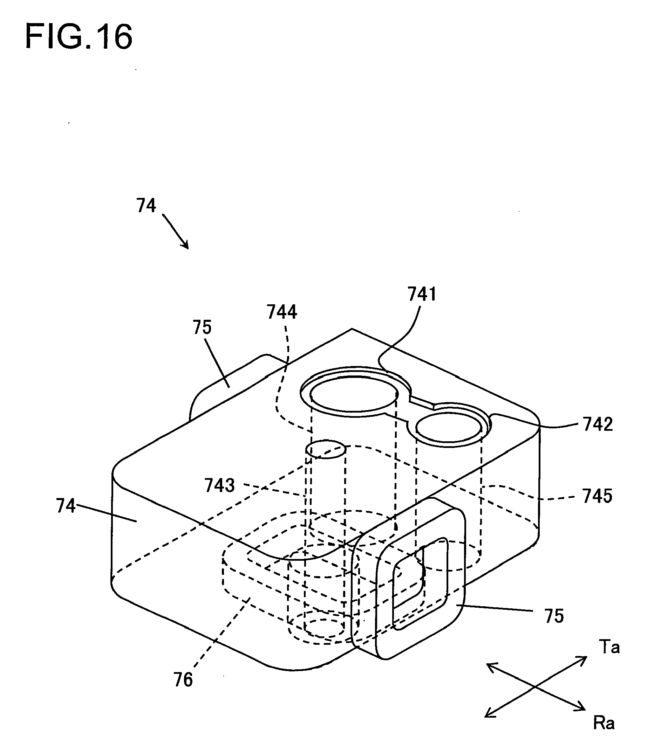

Fig. 14 is a plan view to show a schematic structure of an objective lens actuator 7 of the axial sliding type, Fig. 15 is a cross sectional view of the above described objective lens actuator 7, Fig. 16 is a perspective view of a lens holder 74 of the above described objective lens actuator 7. Here, in Fig. 14 and Fig. 16 the first objective lens 38 and the second objective lens 48 are not shown for the sake of convenience. The lens holder 74 is mounted slidably and rotatably with regard to a shaft 73 which is a rotating shaft mounted on an actuator base 71.

To be more precise, the objective lens actuator 7 is equipped with the actuator base 71, permanent magnets 72, the shaft 73, the lens holder 74 which holds the first objective lens 38 and the second objective lens 48, tracking coils 75, and a focusing coil 76.

The actuator base 71 is formed in a rectangular shape when viewed from above, and has a bottom portion 711 and standup portions 712 which stand up vertically to the bottom portion 711 from circumference of the bottom portion 711. In substantially central portion of the bottom portion 711 the shaft 73 in a cylindrical shape which protrudes in the same direction as the standup portion 712 is disposed to stand so as to pass through the lens holder 74. In the standup portion 712 two permanent magnets 72 are disposed at positions where they oppose each other to sandwich the shaft 73. At this point, number of the permanent magnets 72 is not limited to two.

The lens holder 74 is equipped with a first objective lens mounting hole 741 on which the first objective lens 38 is mounted, a second objective lens mounting hole 742 on which the second objective lens 48 is mounted, and an axis hole 743 which penetrates substantially central portion of the main body and through which the shaft 73 passes. The first objective lens mounting hole 741 and the second objective lens mounting hole 742 are formed side by side in the Ra direction. Therefore, when the first objective lens 38 and the second objective lens 48 are inserted respectively in these mounting holes, the first objective lens 38 and the second objective lens 48 are disposed in alignment with the Ra direction. Here, the lens holder 74 has a first through hole 744 and a second through hole 745, these correspond to the first through hole 243 and the second through hole 244 in the lens holder 24 shown in Fig. 7.

The tracking coils 75 are disposed on side surface of the lens holder 74 symmetric with respect to the axis hole 743 so as to sandwich it. The focusing coil 76 is disposed on bottom surface of the lens holder 74 so as to surround the axis hole 743. In the bottom surface of the focusing coil 76 a magnetic plate (not shown) is disposed.

It is of course possible to apply the structure shown in Fig. 5 to Fig. 13 which are described about the objective lens actuator 2 of the wire type, in the objective lens actuator 7 of so called axial sliding type as above described in which the lens holder 74 is supported slidably and rotatably with respect to the shaft 73. Therefore in this case, the same effects as those of the present invention which are obtained in the objective lens actuator 2 of the wire type can also be obtained in the objective lens actuator 7 of the axial sliding type, such as the working property of the mounting the respective objective lenses on the lens holder can be improved and the like, because the relative tilt between a plurality of the objective lenses is reduced.

At this point, in the present embodiment, the structure in which the first optical system 3 that performs recording/reproducing for a CD medium and/or a DVD medium and the second optical system 4 that performs recording/reproducing for a BD medium are formed independently each other is described, however, the present invention is not limited to this structure. A structure may be possible in which a part of the optical pickup device (for example, from the polarization beam splitter to the quarter-wave plate) are shared, for example. In this case a member is required that separates a laser beam which passes through the quarter-wave plate and makes the infrared laser beam and the red laser beam enter into the first objective lens and the blue laser beam enter into the second objective lens. By this sharing the optical pickup device can be downsized and number of parts can be decreased, and labor and hour for assembly and adjustment can be reduced, therefore, production cost can be reduced.

The present invention can be applied to the optical disc apparatus which uses the optical disc such as a DVD, a CD, a BD, and the like as the recording media.

Here, the present invention can be described as below. An objective lens actuator according to the present invention includes: a plurality of objective lenses which are composed as separate bodies each other; a lens holder to hold a plurality of the objective lenses side by side; and a driving means to move the lens holder such that a light beam is condensed on a prescribed track of a recording surface of an optical recording medium via the objective lens which corresponds to the used optical recording medium, and the objective lens actuator is characterized by that the lens holder has a plurality of lens receiving surfaces to receive each one of a plurality of the objective lenses by contacting with each of the round edge surfaces of a plurality of the objective lenses, and a plurality of the lens receiving surfaces are formed to be coplanar.

According to the above described structure, a plurality of the objective lenses are held side by side by the lens holder. This lens holder moves for example in the focusing direction (optical axis direction of the objective lens) and the tracking direction (radial direction of the optical recording medium) by a driving means such that the light beam is condensed on the prescribed track of recording surface of the optical recording medium via the objective lens which corresponds to the used optical recording medium. By this arrangement it becomes possible to properly perform recording or reproducing of information for the used optical recording medium.

At this point, the lens holder includes a plurality of lens receiving surfaces which contact with the round edge surface of each of the objective lenses, and a plurality of the lens receiving surfaces are formed to be coplanar. By this arrangement the relative tilt between the respective objective lenses is automatically solved because optical axes of the respective objective lenses are made parallel each other at the same time when the respective objective lenses are installed on the respective lens receiving surfaces as far as the respective objective lenses are designed precisely.

As above described, according to the present invention by a simple structure in which each of the lens receiving surfaces are formed to be coplanar, the relative tilt between the respective objective lenses can be reduced, therefore, working property of the mounting respective objective lenses on the lens holder can be improved. That is, the structure can make it unnecessary to perform additional adjustment for the optical axis (tilting adjustment) for one of the objective lenses in order to solve the relative tilt.

Further, because a plurality of the objective lenses are formed as separate bodies each other, when a part of a plurality of the objective lenses is available in market as a commercial product, the commercial product can be easily utilized. As a result, increase in cost of the optical pickup device as a whole can be suppressed.

In the objective lens actuator according to the present invention, it is preferable that a plurality of the objective lenses include a first objective lens which condenses the light beam on the recording surface of the first or second optical recording medium, a second objective lens which condenses the light beam on the recording surface of the third optical recording medium, and a plurality of the lens receiving surfaces includes a first lens receiving surface which receives the first objective lens by contacting with the round edge surface of the first objective lens and a second lens receiving surface which receives the second objective lens by contacting with the round edge surface of the second objective lens.

Here, as for the first optical recording medium, for example, a CD is conceivable, and as for the second optical recording medium, for example, a DVD is conceivable. Further, as for the third optical recording medium, for example, a BD is conceivable.

According to the above described structure, even when the objective lens for a CD and a DVD is utilized as the first objective lens, and the objective lens for a BD is utilized as the second objective lens, the round edge surfaces of these objective lenses can be surely received by the first lens receiving surface and the second lens receiving surface, and the respective objective lenses can be mounted on the lens holder. Further, when respective objective lenses of such kinds are utilized, the relative tilt between the respective objective lenses can be surely reduced.

An objective lens actuator according to the present invention include: a plurality of objective lenses composed as separate bodies each other; a lens holder holding a plurality of the objective lenses side by side; and a driving means moving the lens holder such that a light beam is condensed on a prescribed track on a recording surface of an optical recording medium via the objective lens which corresponds to the used optical recording medium, and the objective lens actuator is characterized by that the lens holder has a lens receiving surface to receive any of a plurality of the objective lenses by contacting with the round edge surface of the objective lens, and a spacer receiving surface to receive a spacer by contacting with the spacer when remaining objective lens is held via the spacer, and the lens receiving surface and the spacer receiving surface are formed to be coplanar.

According to the above described structure, a plurality of the objective lenses are held side by side by the lens holder. This lens holder moves for example in the focusing direction (optical axis direction of the objective lens) and the tracking direction (redial direction of the optical recording medium) by a driving means such that the light beam is condensed on a prescribed track of recording surface of the optical recording medium via the objective lens which corresponds to the used optical recording medium. By this arrangement it becomes possible to properly perform recording or reproducing of information for the used optical recording medium.

At this point, the above described lens holder has the lens receiving surface and the spacer receiving surface, and the lens receiving surface and the spacer receiving surface are formed to be coplanar. By this arrangement optical axis of each of the objective lenses become parallel to each other at the same time when a part of the objective lenses is installed on the spacer receiving surface through the spacer and the remaining objective lenses is installed on the lens receiving surface as far as the respective objective lenses and the spacer are designed precisely. As a result, the relative tilt between the respective objective lenses is automatically solved.

According to the present invention as above described, by a simple structure in which the lens receiving surface and the spacer receiving surface are formed to be coplanar, the relative tilt between the respective objective lenses can be reduced, therefore, working property of the mounting respective objective lenses on the lens holder can be improved. Further, because a part of the objective lenses is mounted on the lens holder through the spacer, when the objective lens is available in market as a commercial product, for example, the objective lens can be mounted on the lens holder by utilizing a spacer with high accuracy which corresponds to the commercial product.

Further, because a plurality of objective lenses are structured as separate bodies each other, when a part of a plurality of the objective lenses is available in market as a commercial product, the commercial product can be easily utilized. As a result, increase in cost of the optical pickup device as a whole can be suppressed.

In the objective lens actuator according to the present invention it is preferable that the spacer has a lens side contacting surface which contacts with a round edge surface of the objective lens to be held, and a holder side contacting surface which contacts with the spacer receiving surface of the lens holder, and the lens side contacting surface and the holder side contacting surface are parallel.

According to the present invention, because the lens receiving surface and the spacer receiving surface of the lens holder are formed to be coplanar, the optical axis of the objective lens which is held on the lens receiving surface and the optical axis of the objective lens which is held on the spacer contacting with the spacer receiving surface can be surely made parallel as far as the lens side contacting surface and the holder side contacting surface of the spacer are parallel as above described, the relative tilt between the respective objective lenses can be surely reduced.

An objective lens actuator according to the present invention includes: a plurality of objective lenses composed as separate bodies each other; a lens holder holding a plurality of the objective lenses side by side; and a driving means to move the lens holder such that a light beam is condensed on a prescribed track of a recording surface of an optical recording medium via the objective lens which corresponds to the used optical recording medium, and the objective lens actuator is characterized in that a plurality of the objective lenses are held side by side on the lens holder via the same spacer, the lens holder has a spacer receiving surface to receive the spacer by contacting with the spacer, and the spacer receiving surface is formed as a single continuous plane.

According to the structure as above described, a plurality of the objective lenses are held side by side by the lens holder via the same spacer. This lens holder is moved by the driving means in the focusing direction (optical axis direction of the objective lens), and the tracking direction (radial direction of the optical recording medium), for example, such that the light beam is condensed on a prescribed track on a recording surface of an optical recording medium via the objective lens which corresponds to the used optical recording medium. By this arrangement it becomes possible to properly perform recording or reproducing of information for the used optical recording medium.

Here, the above described lens holder has a spacer receiving surface to receive the spacer, and the spacer receiving surface is formed as a single continuous plane. By this arrangement, optical axis of each of the objective lenses becomes parallel to each other at the same time when each of the objective lenses is installed on the spacer receiving surface through the spacer as far as the respective objective lenses and the spacer are designed precisely. Therefore, the relative tilt between the respective objective lenses is automatically solved.

As above described, according to the present invention, by a simple structure in which the spacer receiving surface is formed in single continuous plane, the relative tilt between the respective objective lenses can be reduced, therefore, working property of the mounting for respective objective lenses to the lens holder via the spacer can be improved.

Further, because a plurality of the objective lenses are formed as separate bodies each other, when a part of a plurality of the objective lenses is available in market as a commercial product, the commercial product can be easily utilized. As a result, increase in cost of the optical pickup device as a whole can be suppressed.

In the objective lens actuator according to the present invention it is preferable that the spacer has a lens side contacting surface which contacts with a round edge surface of a plurality of the objective lenses to be held, and a holder side contacting surface which contacts with the spacer receiving surface of the lens holder, and the lens side contacting surface and the holder side contacting surface are parallel.

According to the present invention because the spacer receiving surface of the lens holder is a single continuous plane, optical axis of the respective objective lenses which are held by the spacer supported on the spacer receiving surface can be made parallel each other as far as the lens side contacting surface and the holder side contacting surface of the spacer are parallel as above described, even if the spacer receiving surface is not a plane, i.e., it is slightly flectional surface, as a result, the relative tilt between the respective objective lenses can be surely reduced. That is, according to the above described structure, it is not necessary to require high accuracy for the lens holder (degree of flatness of the spacer receiving surface), manufacturing cost of the lens holder can be reduced.

The above described objective lens actuator according to the present invention, may be in a structure in that the objective lens actuator as above described further includes: a focusing coil and tracking coils disposed on the lens holder, a supporting member which is disposed to stand on a base plate having permanent magnets and yokes, and a plurality of metal wires one ends of which are connected to the supporting member and the other ends of which are connected to the focusing coil and the tracking coils to support the lens holder in shakable manner with respect to the base plate and to supply electric power to the focusing coil and the tracking coils.

In the above described structure, one ends of a plurality of the metal wires are connected to the supporting member on the base plate and the other ends of the metal wires are connected to the focusing coil and the tracking coils. When electric power is supplied to the focusing coil and the tracking coils via the metal wires, by interaction between magnetic field generated by the permanent magnet and electric current passing through the focusing coil and the tracking coils, the lens holder can be moved in the focusing direction and the tracking direction. As a result, the objective lens actuator of so called wire type can be realized by the above described structure.

In the above described objective lens actuator according to the present invention, the lens holder may be in a structure in that the lens holder is supported slidably and rotatably with respect to a rotation axis which penetrates the lens holder. In this structure the lens holder can be moved in the focusing direction by a slide with respect to the rotation axis, and the lens holder can be moved in the tracking direction by rotation with respect to the rotation axis. That is, the objective lens actuator of so called axial sliding type can be realized by the above described structure.

An optical pickup device according to the present invention includes: a plurality of light sources which emit light beams having wavelength corresponding to a plurality of optical recording media; and an objective lens actuator to hold a plurality of objective lenses which condense each of the light beams emitted from the respective light sources on each of recording surfaces of the used optical recording media, and the optical pickup device is characterized by that the objective lens actuator is structured by the objective lens actuator according to the present invention as above described.

According to the above described structure, each of the light beams emitted from the respective light sources is condensed on the recording surface of the used optical recording medium by each of the objective lenses held by the objective lens actuator. By this arrangement recording or reproducing of information can be performed in response to the used optical recording medium.

At this moment because the objective lens actuator is structured by the objective lens actuator according to the present invention and the relative tilt between the respective objective lenses can be reduced by a simple structure, the working property of mounting the respective objective lenses on the lens holder can be improved. In addition, because a plurality of the objective lenses are formed as separate bodies each other, when a part of a plurality of the objective lenses is available in market as a commercial product, the commercial product can be easily utilized. As a result, increase in cost of the optical pickup device as a whole can be suppressed.

By the above described explanation the optical pickup device according to the present invention can be described in detail as below. That is, an optical pickup device according to the present invention includes: a plurality of light sources which emit laser beams; and an objective lens actuator to hold a plurality of objective lenses which condense each of the laser beams emitted from the respective light sources on a recording surface of the used optical recording media, and the optical pickup device is characterized by that a plurality of the light sources include an infrared laser light source which emits an infrared laser beam, a red laser light source which emits a red laser beam, and a blue laser light source which emits a blue laser beam, the objective lens actuator includes a first objective lens which condenses the infrared laser beam on recording surface of a CD medium and the red laser beam on recording surface of a DVD medium, a second objective lens which is structured as a separate body from the first objective lens and condenses the blue laser beam on recording surface of a blu-ray disc medium, a lens holder holding the first objective lens and the second objective lens side by side and having a focusing coil and tracking coils, a supporting member which is disposed to stand on a base plate having permanent magnets and yokes, and a plurality of metal wires one ends of which are connected to the supporting member and the other ends of which are connected to the focusing coil and the tracking coils to support the lens holder in shakable manner with respect to the base plate and to supply electric power to the focusing coil and the tracking coils, the optical pickup device is further characterized by that the lens holder of the objective lens actuator includes a first lens receiving surface to receive the first objective lens by contacting with the round edge surface of the first objective lens, and a second lens receiving surface to receive the second objective lens by contacting with the round edge surface of the second objective lens, and the first lens receiving surface and the second lens receiving surface are formed to be coplanar.

As above described embodiments of the present invention are explained in detail. However, the present invention is not limited to the above described embodiments, and may be changed variously without departing from scope and spirits of the invention, further, combination of each of the elements can be possible, of course. In addition, from the above description, it is obvious that various modification and transformation can be introduced into the present invention. As a result, it should be understood that the present invention can be carried out in scope of the below described claims without being limited by each of the description of detailed embodiment.

## Claims

1. An objective lens actuator comprising:
a plurality of objective lenses composed as separate bodies each other;
a lens holder holding a plurality of the objective lenses side by side; and
a driving means moving the lens holder such that a light beam is condensed on a prescribed track on a recording surface of an optical recording medium via the objective lens corresponding to the used optical recording medium, **characterized in that**
the lens holder has a plurality of lens receiving surfaces receiving each of the objective lenses by contacting with a lower surface of peripheral portion of each of a plurality of the objective lenses, and
a plurality of the lens receiving surfaces are formed to be coplanar.

2. The objective lens actuator according to claim 1, **characterized in that**
a plurality of the objective lenses include
a first objective lens condensing the light beam on the recording surface of a first optical recording medium and a second optical recording medium, and
a second objective lens condensing the light beam on the recording surface of a third optical recording medium, and **characterized in that**
a plurality of the lens receiving surfaces include
a first lens receiving surface receiving the first objective lens by contacting with a lower surface of peripheral portion of the first objective lens, and
a second lens receiving surface receiving the second objective lens by contacting with a lower surface of peripheral portion of the second objective lens.

3. An objective lens actuator comprising:
a plurality of objective lenses composed as separate bodies each other;
a lens holder holding a plurality of the objective lenses side by side; and
a driving means moving the lens holder such that a light beam is condensed on a prescribed track on a recording surface of an optical recording medium via the objective lens corresponding to the used optical recording medium, **characterized in that**
the lens holder has a lens receiving surface receiving the objective lens by contacting with a lower surface of peripheral portion of any of a plurality of the objective lenses, and a spacer receiving surface receiving a spacer by contacting with the spacer when remaining objective lenses are held via the spacer, and
the lens receiving surface and the spacer receiving surface are formed to be coplanar.

4. The objective lens actuator according to claim 3, **characterized in that**
the spacer has a lens side contacting surface contacting with a lower surface of peripheral portion of the objective lens to be held, and a holder side contacting surface contacting with the spacer receiving surface of the lens holder, and
the lens side contacting surface and the holder side contacting surface are parallel.

5. An objective lens actuator comprising:
a plurality of objective lenses composed as separate bodies each other;
a lens holder holding a plurality of the objective lenses side by side; and
a driving means moving the lens holder such that a light beam is condensed on a prescribed track on a recording surface of an optical recording medium via the objective lens corresponding to the used optical recording medium, **characterized in that**
a plurality of the objective lenses are held side by side on the lens holder via a same spacer,
the lens holder has a spacer receiving surface receiving the spacer by contacting with the spacer, and
the spacer receiving surface is formed as a single continuous plane.

6. The objective lens actuator according to claim 5, **characterized in that**
the spacer has a lens side contacting surface contacting with a lower surface of peripheral portion of a plurality of the objective lenses to be held, and a holder side contacting surface contacting with the spacer receiving surface of the lens holder, and
the lens side contacting surface and the holder side contacting surface are parallel.

7. The objective lens actuator according to any one of claim 1 to claim 6 further comprising:
a focusing coil and tracking coils disposed on the lens holder,
a supporting member disposed to stand on a base plate having permanent magnets and yokes, and
a plurality of metal wires whose one ends are connected to the supporting member and the other ends are connected to the focusing coil and the tracking coils to support the lens holder in shakable manner with respect to the base plate and to supply electric power to the focusing coil and the tracking coils.

8. The objective lens actuator according to any one of claim 1 to claim 6, **characterized in that**
the lens holder is supported slidably and rotatably with respect to a rotation axis penetrating the lens holder.

9. An optical pickup device comprising:
a plurality of light sources emitting light beams having wavelength corresponding to a plurality of optical recording media; and
an objective lens actuator holding a plurality of objective lenses condensing the light beam emitted from the respective light sources on a recording surface, of the used optical recording media, **characterized in that**
the objective lens actuator is structured by the objective lens actuator according to any one of claim 1 to claim 8.

10. An optical pickup device comprising:
a plurality of light sources emitting laser beams; and
an objective lens actuator holding a plurality of objective lenses condensing the laser beam emitted from the respective light sources on a recording surface of the used optical recording media, **characterized in that**
a plurality of the light sources include
an infrared laser light source emitting infrared laser beam,
a red laser light source emitting red laser beam, and
a blue laser light source emitting blue laser beam, and
the objective lens actuator includes
a first objective lens condensing the infrared laser beam on a recording surface of a CD medium and the red laser beam on a recording surface of a DVD medium,
a second objective lens structured as a separate body from the first objective lens and condensing the blue laser beam on a recording surface of a blu-ray disc medium
a lens holder holding the first objective lens and the second objective lens side by side and having a focusing coil and tracking coils
a supporting member disposed to stand on a base plate having permanent magnets and yokes, and
a plurality of metal wires whose one ends are connected to the supporting member and the other ends are connected to the focusing coil and the tracking coils to support the lens holder in shakable manner with respect to the base plate and to supply electric power to the focusing coil and the tracking coils, **characterized in that**
the lens holder of the objective lens actuator includes
a first lens receiving surface receiving the first objective lens by contacting with a lower surface of peripheral portion of the first objective lens, and
a second lens receiving surface receiving the second objective lens by contacting with a lower surface of peripheral portion of the second objective lens, and
the first lens receiving surface and the second lens receiving surface are formed to be coplanar.
